# EUROPÄISCHE PATENTSCHRIFT

(11) **EP 4 069 952 B1**
(45) Veröffentlichungstag und Bekanntmachung des Hinweises auf die Patenterteilung: **10.04.2024**
(21) Anmeldenummer: 20808348.5
(22) Anmeldetag: 17.11.2020
(51) Int. Cl.: F01N 3/20, F01N 3/28

(54) **STÜTZSTIFT FÜR KATALYSATOR MIT ELEKTRISCHER HEIZSCHEIBE**
SUPPORT PIN FOR CATALYTIC CONVERTER WITH ELECTRIC HEATING DISK
BROCHE DE SUPPORT POUR CONVERTISSEUR CATALYTIQUE À DISQUE CHAUFFANT ÉLECTRIQUE

(30) Priorität: 04.12.2019 DE 102019218885
(43) Veröffentlichungstag der Anmeldung: 12.10.2022
(73) Patentinhaber: Vitesco Technologies GmbH, 93055 Regensburg (DE)
(72) Erfinder: HIRTH, Peter, 81737 München (DE); SCHEPERS, Sven, 81737 München (DE); HÄRIG, Thomas, 81737 München (DE)
(74) Vertreter: Vitesco Technologies
(86) Internationale Anmeldenummer: PCT/EP2020/082346
(87) Internationale Veröffentlichungsnummer: WO 2021/110406

(56) Entgegenhaltungen:
- EP-A1- 3 299 599
- DE-A1- 4 434 673
- DE-A1-102008 035 561
- DE-A1-102010 052 650
- DE-A1-102011 120 720

## Beschreibung

### Technisches Gebiet

Die Erfindung betrifft einen Katalysator zur Nachbehandlung von Abgasen eines Verbrennungsmotors, mit zumindest einem Katalysator und zumindest einer elektrisch beheizbaren Heizscheibe, wobei der Katalysator und die Heizscheibe jeweils durch einen Wabenkörper mit einer Mehrzahl entlang einer Hauptdurchströmungsrichtung durchströmbaren Strömungskanälen gebildet sind, wobei die mechanische Verbindung zwischen dem Katalysator und der Heizscheibe durch zumindest einen Stützstift gebildet ist.

### Stand der Technik

Aktuell werden bei der Herstellung von elektrisch beheizten Katalysatorträgern Stützstifte eingesetzt, welche die Aufgabe haben die dem Katalysator vorgeschaltete Heizscheibe mechanisch mit dem Katalysator zu verbinden, gleichzeitig aber auch beide Bauteile elektrisch voneinander zu trennen. Dazu wird gewöhnlich ein Stift verwendet, dessen Seele aus einem Metalldraht besteht, welcher zur elektrischen Isolierung mit einer keramischen Ummantelung versehen wurde. Zusätzlich kann ein solcher Stift an seinem Außenumfang zumindest einseitig eine metallische Hülse aufweisen. Die metallische Hülse dient dabei regelmäßig zur Verbindung des Stiftes mit der Heizscheibe, während die metallische Seele zur Verbindung mit der Matrix des Katalysators dient.

Die DE 10 2011 120720 A1 offenbart einen Stützstift zur Abstützung eines elektrisch beheizbaren Wabenkörpers an einem ersten Wabenkörper, wobei der Stützstift einen ersten Endbereich, einen zweiten Endbereich und einen Zwischenbereich hat, wobei der Stützstift einen Kern aus keramischem, elektrisch nicht leitfähigem Material und an mindestens einem Endbereich eine metallisierte Oberfläche und einen elektrisch nicht leitfähigen Zwischenbereich mit einer Länge von mindestens 3 mm (Millimeter), vorzugsweise 5 bis 15 mm, aufweist.

Die DE 10 2010 052650 A1 offenbart eine Anordnung umfassend zwei hintereinander angeordnete Abgasbehandlungsvorrichtungen in einer Abgasleitung, wobei eine erste Abgasbehandlungsvorrichtung mit einem ersten Teilbereich über mindestens einen Stützkörper mit einem zweiten Teilbereich einer zweiten Abgasbehandlungsvorrichtung verbunden ist, wobei der Stützkörper gegenüberliegende Enden aufweist und an den Enden über Anbindungspunkte mit jeweils einem Teilbereich verbunden ist, wobei zumindest der zweite Teilbereich durch metallische Komponenten gebildet ist, die durch gegenseitige Kontaktierung Kontaktflächen formen, wobei höchstens 20% der Fläche der Kontaktflächen Lötverbindungen und/oder Diffusionsverbindungen aufweist.

In den aktuell verwendeten und im Stand der Technik bekannten Stiften wird regelmäßig Magnesiumoxid (MgO) als Isolator eingesetzt. Nachteilig an Magnesiumoxid als Isolator ist insbesondere, dass es nicht resistent gegenüber Auswaschungen ist. Beispielsweise kann es durch das im Abgasstrang verwendetes AdBlue zu einer Auswaschung des Magnesiumoxids kommen, wodurch die Isolationswirkung reduziert wird und gegebenenfalls ein Kurzschluss erzeugt wird. Weiterhin ist es nachteilig, dass die mögliche erzeugbare Isolationsstrecke bei Verwendung des porösen Materials in ihrer Länge limitiert ist.

### Darstellung der Erfindung, Aufgabe, Lösung, Vorteile

Daher ist es die Aufgabe der vorliegenden Erfindung einen Stützstift für die Verwendung in einem Heizkatalysator zu schaffen, welcher eine verbesserte elektrische Isolationswirkung aufweisen und resistenter ist gegenüber Auswaschungen des zur elektrischen Isolation verwendeten Materials.

Die Aufgabe hinsichtlich des Stützstiftes wird durch einen Stützstift mit den Merkmalen von Anspruch 1 gelöst.

Ein Ausführungsbeispiel der Erfindung betrifft einen Katalysator zur Nachbehandlung von Abgasen eines Verbrennungsmotors, mit zumindest einem Katalysator und zumindest einer elektrisch beheizbaren Heizscheibe, wobei der Katalysator und die Heizscheibe jeweils durch einen Wabenkörper mit einer Mehrzahl entlang einer Hauptdurchströmungsrichtung durchströmbaren Strömungskanälen gebildet sind, wobei die mechanische Verbindung zwischen dem Katalysator und der Heizscheibe durch zumindest einen Stützstift gebildet ist, wobei der Stützstift eine innenliegende Seele aufweist und der Stützstift an beiden Endbereichen jeweils eine Verdickung aufweist, wobei die Seele durch ein keramisches Material gebildet ist und die Verdickung durch ein Keramik-Metallgemisch gebildet ist, wobei wenn der Metallanteil in dem Keramik-Metallgemisch mit steigendem Durchmesser größer wird, so dass nahe an der keramischen Seele der Metallanteil geringer ist als am Außenumfang der Verdickung des Stützstiftes.

Ein Stützstift kann ausreichend sein, um zwei Wabenkörper miteinander zu verbinden. Je nach Anwendungszweck kann jedoch bevorzugt eine Mehrzahl von Stützstiften verwendet werden, um eine sichere Beabstandung und Fixierung der Wabenkörper zu erreichen.

Durch die keramische Seele wird eine isolierende Wirkung des Stützstiftes erreicht, wodurch eine elektrische Isolation der beiden Wabenkörper voneinander erreicht wird. Durch das Keramik-Metallgemisch kann eine Verbindung zu den Wabenkörpern beispielsweise durch Löten erzeugt werden. Insbesondere vorteilhaft gegenüber Stützstiften, welche bereits im Stand der Technik bekannt sind, ist, dass ein Keramik-Metallgemisch resistenter gegenüber Auswaschungen ist, die beispielsweise durch Wasserlösungen, wie beispielsweise aus einer wässrigen Harnstofflösung (Handelsname AdBlue), verursacht werden können. In bekannten Stützstiften verwendeten Magnesiumoxid ist für solche Auswaschungen besonders anfällig, wodurch es zu einer irreversiblen Beschädigung der Stützstifte kommen kann.

Bevorzugt werden die Stützstifte an den jeweiligen Endbereichen mit den Wabenkörpern beziehungsweise den die Strömungskanäle ausbildenden Strukturen stoffschlüssig verbunden werden. Hierzu können die Stützstifte etwa mit dem Wabenkörper verlötet werden. Zu diesem Zweck muss der Stützstift insbesondere an seinen Endbereichen und dort am Außenumfang einen ausreichend hohen metallischen Anteil aufweisen, um eine Lötverbindung zu ermöglichen. Durch das Aufbringen eines Haftvermittlers, wie beispielsweise einem Lot, zwischen dem Stützstift und den Kontaktstellen mit dem Wabenkörper kann eine haltbare Lötverbindung erzeugt werden.

Durch eine Veränderung des Metallanteils in dem Keramik-Metallgemisch kann die Verbindung zwischen dem Material der Verdickungen und der keramischen Seele einerseits und zwischen dem Material der Verdickung und dem metallischen Wabenkörper andererseits verbessert werden. Zwischen dem Wabenkörper und der Außenseite der Verdickung des Stützstiftes ist vorzugweise ein Metall-Metall Kontakt ausgebildet, während zwischen der Seele und der Innenseite der Verdickung möglichst ein Keramik-Keramik Kontakt ausgebildet ist. Da die Verdickungen jeweils durch ein Keramik-Metallgemisch erzeugt werden, ist ein reiner Metall-Metall Kontakt beziehungsweise ein Keramik-Keramik Kontakt praktisch nicht realisierbar. Der Anteil des an der jeweiligen Kontaktstelle bevorzugten Materials kann jedoch im Gegensatz zum jeweils anderen Material deutlich erhöht werden.

Besonders vorteilhaft ist es, wenn eine oder beide endseitigen Verdickungen des Stützstiftes eine zylindrische Form aufweisen. Eine zylindrische Form ist vorteilhaft, um einen stabilen Kontakt der Stützstifte mit den Wabenkörpern, insbesondere den Strömungskanälen der Wabenkörper, in welche die Stützstifte eingesteckt sind, zu erzeugen. Besonders bevorzugt weisen die Verdickungen jeweils eine Länge von 5mm bis maximal 20mm auf. Dies gewährleistet eine ausreichende Einschubtiefe in den jeweiligen Wabenkörper, um eine ausreichend haltbare Verbindung herstellen zu können.

Auch ist es vorteilhaft, wenn eine oder beide endseitige Verdickungen des Stützstiftes durch mehrere aufeinandergeschichtete Lagen eines Keramik-Metallgemischs gebildet sind. Mehrere unterschiedliche Lagen sind vorteilhaft, da lagenweise unterschiedliche Stoffgemische verwendet werden können, um beispielsweise in Inneren des Stützstiftes andere Materialeigenschaften zu erzeugen als am äußeren Umfang des Stützstiftes. Vorzugsweise werden höhere Keramikanteile im Inneren und höherer Metallanteile am Außenumfang realisiert.

Ein bevorzugtes Ausführungsbeispiel ist dadurch gekennzeichnet, dass die endseitigen Verdickungen des Stützstiftes in axialer Richtung des Stützstiftes, einen Abstand zueinander von mindestens 1mm und maximal 10mm aufweisen. Diese Größenverhältnisse sind insbesondere für Wabenkörper, wie sie in Abgasnachbehandlungsvorrichtungen für Kraftfahrzeuge verwendet werden, vorteilhaft, um einen geeigneten Abstand der beiden Wabenkörper zueinander zu erzeugen. Hierdurch soll insbesondere ein elektrischer Kurzschluss zwischen den zueinander beabstandeten Wabenkörpern, beispielsweise durch einen Überschlag, verhindert werden.

Darüber hinaus ist es vorteilhaft, wenn das Keramik-Metallgemisch eine Nickelbasis aufweist. Ein solches Gemisch auf Basis von Nickel weist insbesondere einen vorteilhaften thermischen Ausdehnungskoeffizienten auf.

Weiterhin ist es vorteilhaft, wenn die die Verdickung bildenden Schichten einem Haftvermittler zur Verbindung des Stützstiftes mit den jeweiligen Wabenkörpern ausbilden. Ein Haftvermittler kann beispielsweise ein Lotmaterial sein, welches zur Verbindung des Stützstiftes mit dem Wabenkörper verwendet werden kann.

Auch ist es zweckmäßig, wenn der Haftvermittler mehrheitlich aus Kupfer oder Nickel beziehungsweise deren Legierungen gebildet ist. Diese Legierungen bieten vorteilhafte thermische Ausdehnungskoeffizienten.

Darüber hinaus ist es vorteilhaft, wenn der Haftvermittler einen thermischen Ausdehnungskoeffizienten ausweist, dessen Größe zwischen dem thermischen Ausdehnungskoeffizienten der Wabenkörper und dem thermischen Ausdehnungskoeffizienten des die Seele bildenden keramischen Materials liegt. Dies ist vorteilhaft um beispielsweise Risse infolge thermischer Spannungen zu vermeiden.

Weiterhin ist es zweckmäßig, wenn die keramische Seele zumindest einseitig über die endseitige Verdickung in axialer Erstreckungsrichtung des Stützstiftes hinaussteht. Hierdurch wird eine zusätzliche Isolationsstrecke erzeugt, die insbesondere einen elektrischen Überschlag verhindern soll.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht durch einen Stützstift, insbesondere den Endbereich des Stützstiftes,
- Fig. 2: eine Schnittansicht durch einen Stützstift mit einer über die endseitige Verdickung überstehende Keramikseele, und
- Fig. 3: eine Schnittansicht durch einen Stützstift, wobei beide Endbereiche in einem metallischen Wabenkörper aufgenommen sind.

### Bevorzugte Ausführung der Erfindung

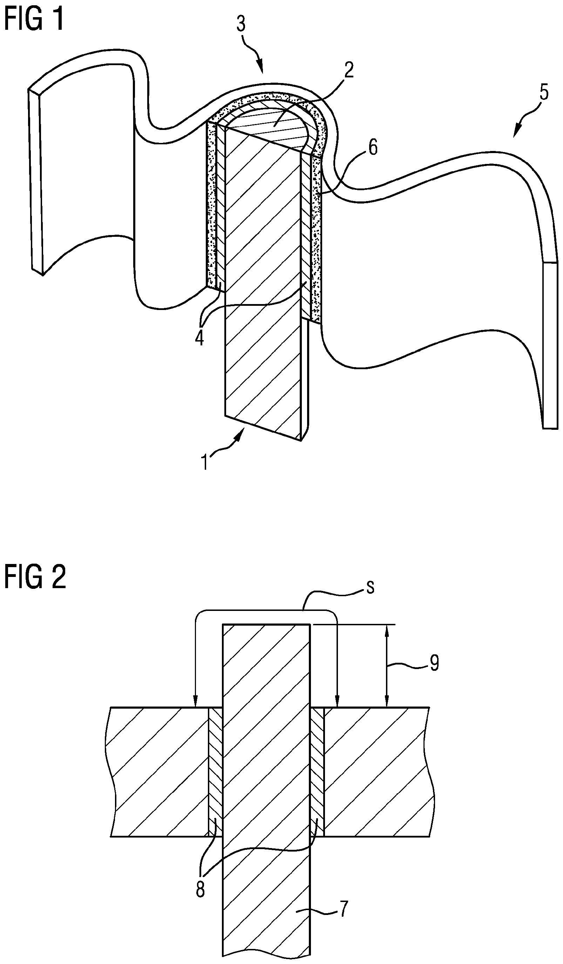

Die Figur 1 zeigt einen Schnitt durch einen Stützstift 1. Dieser weist eine keramische Seele 2 auf. An seinen beiden Enden, wovon jedoch nur eines dargestellt ist, weist der Stützstift 1 eine Verdickung 3 auf, die durch eine Beschichtung 4 aus einem Keramik-Metallgemisch gebildet ist.

Der Stützstift 1 ist in einem Wabenkörper 5 aufgenommen. Von dem Wabenkörper 5 ist in Figur 1 nur ein Teil einer Welllage dargestellt. Der Stützstift 1 ist dabei endseitig in eine der Wellungen eingelegt. Die angedeutete Welllage und die nicht gezeigten Glattlagen bilden gemeinsam die Strömungskanäle des Wabenkörpers 5 aus.

Zwischen dem Stützstift 1 und dem Wabenkörper 5 ist ein Haftvermittler 6 angeordnet, welcher zur Verbindung zwischen dem Wabenkörper 5 und der Verdickung 3 des Stützstiftes 1 dient. Ein Haftvermittler 6 kann beispielsweise ein Lot sein, welches zur Verlötung des Wabenkörpers 5 mit dem Keramik-Metallgemisch 4 des Stützstiftes 1 genutzt wird.

Das Keramik-Metallgemisch 4 kann entlang der radialen Richtung unterschiedlich hohe Keramik oder Metallkonzentrationen aufweisen. Hierzu kann die durch das Keramik-Metallgemisch 4 gebildete Verdickung 3 beispielsweise aus mehreren Lagen gebildet sein, die jeweils unterschiedliche Mischverhältnisse zwischen den keramischen und den metallischen Bestandteilen aufweisen.

Die Figur 2 zeigt eine weitere Schnittansicht durch einen Stützstift 7, wobei im Unterschied zur Figur 1 der Stützstift 7 eine keramische Seele 8 aufweist, die in axialer Richtung über den durch die Verdickung 8 definierten Endbereich des Stützstiftes 7 hinaussteht. Dieser Abschnitt 9 der keramischen Seele, welcher übersteht, weist keine weitere Keramik-Metallgemisch Beschichtung auf. Dies ist insbesondere vorteilhaft, wenn die von dem Stützstift erzeugte Isolationsstrecke länger sein soll. Durch den rein keramischen Abschnitt 9 wird die mit dem Buchstaben s bezeichnete Strecke als zusätzliche Isolationsstrecke gewonnen. Der Abschnitt 9 ragt bevorzugt über den Punkt der Verbindung zwischen dem Stützstift und dem Wabenkörper hinaus in den Wabenkörper hinein.

Ein solcher Aufbau ist insbesondere vorteilhaft, wenn der Stützstift zur elektrischen Isolation zweier Metalle an einem der Endbereiche genutzt wird, die unterschiedliche elektrische Ladungen tragen, um einen Kurzschluss zwischen diesen zu vermeiden.

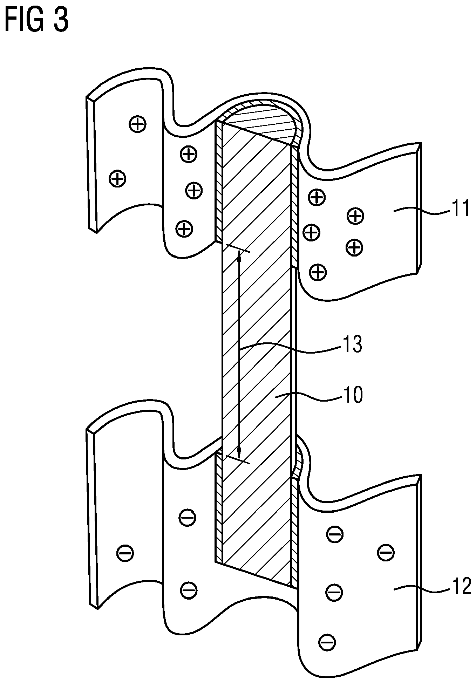

Die Figur 3 zeigt einen weiteren Schnitt durch einen Stützstift 10, wobei in Figur 3 beide Enden des Stützstiftes 10 in jeweils einem durch einen Welllage 11, 12 angedeuteten Wabenkörper eingesteckt und mit diesem verbunden sind. Der Stützstift 10 weist ebenfalls endseitig Verdickungen durch ein Keramik-Metallgemisch auf, welches durch einen Haftvermittler und einen geeigneten Bearbeitungsprozess mit dem Wabenkörper verbunden ist.

In Figur 3 ist zu erkennen, wie die beiden durch den Stützstift 10 miteinander verbundenen Wabenkörper um die Strecke 13 von einander beabstandet sind. Die Stecke 13 ist dabei im Wesentlichen durch die Länge des Stützstiftes 10 und die Länge der endseitigen Verdickungen definiert. Die Strecke 13 ist dabei bevorzugt groß genug um einen elektrischen Kurzschluss zwischen den beiden Wabenkörpern zu vermeiden und gleichzeitig gering genug um die erwünschten Effekte, wie beispielsweise die Aufheizung eines Wabenkörpers durch einen elektrisch beheizten Wabenkörper bestmöglich zu gewährleisten.

Die Ausführungsbeispiele der Figuren 1 bis 3 weisen insbesondere keinen beschränkenden Charakter auf und dienen der Verdeutlichung des Erfindungsgedankens.

## Patentansprüche

1. Katalysator zur Nachbehandlung von Abgasen eines Verbrennungsmotors, mit zumindest einem Katalysator und zumindest einer elektrisch beheizbaren Heizscheibe, wobei der Katalysator und die Heizscheibe jeweils durch einen Wabenkörper mit einer Mehrzahl entlang einer Hauptdurchströmungsrichtung durchströmbaren Strömungskanälen gebildet sind, wobei die mechanische Verbindung zwischen dem Katalysator und der Heizscheibe durch zumindest einen Stützstift (1, 7, 10) gebildet ist, wobei der Stützstift (1, 7, 10) eine innenliegende Seele (2, 8) aufweist und der Stützstift (1, 7, 10) an beiden Endbereichen jeweils eine Verdickung (3) aufweist, wobei die Seele (2, 8) durch ein keramisches Material gebildet ist und die Verdickung (3) durch ein Keramik-Metallgemisch gebildet ist, **dadurch gekennzeichnet , dass** der Metallanteil in dem Keramik-Metallgemisch mit steigendem Durchmesser größer wird, so dass nahe an der keramischen Seele (2, 8) der Metallanteil geringer ist als am Außenumfang der Verdickung (3) des Stützstiftes (1, 7, 10).

2. Katalysator nach Anspruch 1, **dadurch gekennzeichnet, dass** eine oder beide endseitigen Verdickungen (3) des Stützstiftes (1, 7 ,10) eine zylindrische Form aufweisen.

3. Katalysator nach einem der vorhergehenden Ansprüche, **dadurch gekennzeichnet, dass** eine oder beide endseitige Verdickungen (3) des Stützstiftes (1, 7, 10) durch mehrere aufeinandergeschichtete Lagen eines Keramik-Metallgemischs gebildet sind.

4. Katalysator nach einem der vorhergehenden Ansprüche, **dadurch gekennzeichnet, dass** die endseitigen Verdickungen (3) des Stützstiftes (1, 7, 10) in axialer Richtung des Stützstiftes (1, 7, 10), einen Abstand zueinander von mindestens 1mm und maximal 10mm aufweisen.

5. Katalysator nach einem der vorhergehenden Ansprüche, **dadurch gekennzeichnet, dass** das Keramik-Metallgemisch eine Nickelbasis aufweist.

6. Katalysator nach einem der vorhergehenden Ansprüche, **dadurch gekennzeichnet, dass** die die Verdickung (3) bildenden Schichten einem Haftvermittler (6) zur Verbindung des Stützstiftes (1) mit den jeweiligen Wabenkörpern ausbilden.

7. Katalysator nach Anspruch 6, **dadurch gekennzeichnet, dass** der Haftvermittler (6) mehrheitlich aus Kupfer oder Nickel beziehungsweise deren Legierungen gebildet ist.

8. Katalysator nach einem der vorhergehenden Ansprüche, **dadurch gekennzeichnet, dass** der Haftvermittler (6) einen thermischen Ausdehnungskoeffizienten ausweist, dessen Größe zwischen dem thermischen Ausdehnungskoeffizienten der Wabenkörper und dem thermischen Ausdehnungskoeffizienten des die Seele (2) bildenden keramischen Materials liegt.

9. Katalysator nach einem der vorhergehenden Ansprüche, **dadurch gekennzeichnet,dass** die keramische Seele (8) zumindest einseitig über die endseitige Verdickung in axialer Erstreckungsrichtung des Stützstiftes (7) hinaussteht.

## Claims

1. Catalytic converter for aftertreatment of combustion gases from an internal combustion engine, comprising at least one catalyst and at least one electrically heatable heating disk, where the catalyst and the heating disk are each formed by a honeycomb having a multitude of flow channels through which flow is possible in a main flow direction, where the mechanical connection between the catalyst and the heating disk is formed by at least one support pin (1, 7, 10), where the support pin (1, 7, 10) has an inner core (2, 8) and the support pin (1, 7, 10) has a thickening (3) in each of the two end regions, where the core (2, 8) is formed by a ceramic material and the thickening (3) is formed by a ceramic-metal mixture, **characterized in that** the metal content in the ceramic-metal mixture increases with rising diameter, such that the metal content close to the ceramic core (2, 8) is lower than at the outer circumference of the thickening (3) of the support pin (1, 7, 10) .

2. Catalytic converter according to Claim 1, **characterized in that** one or both thickenings (3) at the end of the support pin (1, 7, 10) have a cylindrical shape.

3. Catalytic converter according to either of the preceding claims, **characterized in that** one or both thickenings (3) at the end of the support pin (1, 7, 10) are formed by multiple superposed layers of a ceramic-metal mixture.

4. Catalytic converter according to any of the preceding claims, **characterized in that** the thickenings (3) at the end of the support pin (1, 7, 10), in axial direction of the support pin (1, 7, 10), have a distance from one another of at least 1 mm and not more than 10 mm.

5. Catalytic converter according to any of the preceding claims, **characterized in that** the ceramic-metal mixture is nickel-based.

6. Catalytic converter according to any of the preceding claims, **characterized in that** the layers that form the thickening (3) form an adhesion promoter (6) for bonding of the support pin (1) to the respective honeycombs.

7. Catalytic converter according to Claim 6, **characterized in that** the adhesion promoter (6) is formed mainly from copper or nickel or alloys thereof.

8. Catalytic converter according to any of the preceding claims, **characterized in that** the adhesion promoter (6) has a coefficient of thermal expansion, the size of which is between the coefficient of thermal expansion of the honeycombs and the coefficient of thermal expansion of the ceramic material that forms the core (2).

9. Catalytic converter according to any of the preceding claims, **characterized in that** the ceramic core (8) projects at least on one side beyond the thickening at the end in the direction of axial extension of the support pin (7).

## Revendications

1. Catalyseur pour le post-traitement de gaz d'échappement d'un moteur à combustion interne, présentant au moins un catalyseur et au moins une vitre chauffante pouvant être chauffée électriquement, le catalyseur et la vitre chauffante étant formés à chaque fois par un corps en nids d'abeille présentant une pluralité de canaux d'écoulement pouvant être traversés le long d'une direction d'écoulement principale, la liaison mécanique entre le catalyseur et la vitre chauffante étant formée par au moins une broche support (1, 7, 10), la broche support (1, 7, 10) présentant une âme interne (2, 8) et la broche support (1, 7, 10) présentant, au niveau des deux zones d'extrémité, à chaque fois un épaississement (3), l'âme (2, 8) étant formée par un matériau céramique et l'épaississement (3) étant formé par un mélange céramo-métallique, **caractérisé en ce que** la proportion de métal dans le mélange céramo-métallique augmente avec l'augmentation du diamètre, de telle sorte qu'à proximité de l'âme céramique (2, 8), la proportion de métal est inférieure à celle au niveau de la périphérie externe de l'épaississement (3) de la broche support (1, 7, 10).

2. Catalyseur selon la revendication 1, **caractérisé en ce qu'**un ou les deux épaississements (3) côté extrémité de la broche support (1, 7 ,10) présente (nt) une forme cylindrique.

3. Catalyseur selon l'une des revendications précédentes, **caractérisé en ce qu'**un ou les deux épaississements (3) côté extrémité de la broche support (1, 7, 10) est/sont formé(s) par plusieurs couches superposées d'un mélange céramo-métallique.

4. Catalyseur selon l'une des revendications précédentes, **caractérisé en ce que** les épaississements (3) côté extrémité de la broche support (1, 7, 10) présentent, dans la direction axiale de la broche support (1, 7, 10), une distance l'un par rapport à l'autre d'au moins 1 mm et d'au maximum 10 mm.

5. Catalyseur selon l'une des revendications précédentes, **caractérisé en ce que** le mélange céramo-métallique présente une base de nickel.

6. Catalyseur selon l'une des revendications précédentes, **caractérisé en ce que** les couches formant l'épaississement (3) forment un promoteur d'adhérence (6) destiné à la liaison de la broche support (1) avec les corps en nids d'abeille respectifs.

7. Catalyseur selon la revendication 6, **caractérisé en ce que** le promoteur d'adhérence (6) est formé majoritairement de cuivre ou de nickel ou, selon le cas, de leurs alliages.

8. Catalyseur selon l'une des revendications précédentes, **caractérisé en ce que** le promoteur d'adhérence (6) présente un coefficient de dilatation thermique dont la grandeur se situe entre le coefficient de dilatation thermique du corps en nids d'abeille et le coefficient de dilatation thermique du matériau céramique formant l'âme (2).

9. Catalyseur selon l'une des revendications précédentes, **caractérisé en ce que** l'âme céramique (8) dépasse au moins d'un côté de l'épaississement côté extrémité dans la direction d'extension axiale de la broche support (7).
